# EUROPÄISCHE PATENTSCHRIFT

(11) **EP 1 420 506 B1**
(45) Veröffentlichungstag und Bekanntmachung des Hinweises auf die Patenterteilung: **09.01.2008**
(21) Anmeldenummer: 02025775.4
(22) Anmeldetag: 16.11.2002
(51) Int. Cl.: H02K 21/14, H02K 5/173

(54) **Miniaturmotor mit Dauermagnetläufer**
Miniature motor with permanent magnet rotor
Moteur miniature avec rotor aux aimants permanents

(43) Veröffentlichungstag der Anmeldung: 19.05.2004
(73) Patentinhaber: MINEBEA Co., Ltd., Kitasaku-gun, Nagano-ken (JP)
(72) Erfinder: Barrho, Günther, 78647 Trossingen (DE); Würfel, Peter, 78056 Villingen-Schwenningen (DE)
(74) Vertreter: Hoeger, Stellrecht & Partner Patentanwälte

(56) Entgegenhaltungen:
- US-A- 3 790 834
- US-A- 5 523 634
- PATENT ABSTRACTS OF JAPAN vol. 014, no. 479 (E-0992), 18. Oktober 1990 (1990-10-18) -& JP 02 197243 A (SAILOR PEN CO LTD:THE;OTHERS: 01), 3. August 1990 (1990-08-03)
- PATENT ABSTRACTS OF JAPAN vol. 016, no. 579 (E-1299), 18. Dezember 1992 (1992-12-18) -& JP 04 229065 A (FUJI ELECTRIC CO LTD), 18. August 1992 (1992-08-18)

## Beschreibung

Die Erfindung betrifft eine elektrische Maschine mit einem Gehäuse, mit mindestens einem mit magnetisierten Bereichen versehenen und um eine Rotorachse an mindestens einem Lagerträger des Gehäuses drehbar gelagerten Rotor, und mit einem mindestens eine Statoreinheit aufweisenden Stator, wobei jede Statoreinheit zwei Polschuhelemente aufweist, von denen ein erstes Polschuhelement einen sich quer zur Rotorachse erstreckenden und auf einer dem Rotor zugewandten Seite der Spule angeordneten ersten Polschuhträger sowie einen Satz an diesen einstückig angeformte, als Klauenpole ausgebildete und um die Rotorachse herum angeordnete erste Polschuhe aufweist, welche sich von dem ersten Polschuhträger weg in einer ersten Richtung ungefähr parallel zur Rotorachse erstrecken, und von denen ein zweites Polschuhelement einen sich quer zur Rotorachse erstreckenden und auf einer dem Rotor abgewandten Seite der Spule angeordneten zweiten Polschuhträger sowie einen Satz mit diesem einstückig als Klauenpole ausgebildete und um die Rotorachse herum angeordnete zweite Polschuhe aufweist, die sich ebenfalls in der ersten Richtung vom zweiten Polschuhträger weg ungefähr parallel zur Rotorachse über den Rotor hinweg erstrecken, sowie eine in Richtung der Rotorachse auf den Rotor folgend angeordnete und um die Rotorachse herum verlaufend gewickelte Spule, mit welcher die ersten und zweiten Polschuhe magnetisierbar sind.

Derartige elektrische Maschinen sind aus den Patent Abstracts of Japan vol. 014, no. 479 (E-0992), 18. Oktober 1990 (1990-10-18) -& JP 02 197243 A (SAILOR PEN CO LTD:THE;OTHERS: 01), 3. August 1990 (1990-08-03) bekannt.

Ferner sind aus der US-A-5 523 634 (FURUICHI MAKOTO ET AL) 4. Juni 1996 (1996-06-04) Elektromotoren mit durch eine Spule magnetisierbaren ersten und zweiten Polschuhen bekannt.

Bei den bekannten Lösungen besteht stets das Problem, diese möglichst kostengünstig und einfach aufzubauen.

Diese Aufgabe wird bei einem Elektromotor der eingangs beschriebenen Art erfindungsgemäß dadurch gelöst, dass die elektrische Maschine ein Elektromotor ist, dass der Lagerträger aus Kunststoff ist, dass durch Anformen an den zweiten Polschuhträger die Statoreinheit an diesem fixiert ist, und dass der mindestens eine Lagerträger mit der Statoreinheit in einen Gehäusemantel des Gehäuses eingesetzt ist.

Der Vorteil der erfindungsgemäßen Lösung ist darin zu sehen, dass mit dieser eine einfache und kostengünstige Möglichkeit des Aufbaus der Statoreinheit besteht.

Eine konstruktive besonders günstige Lösung sieht vor, dass ein einen magnetischen Schluss zwischen den Polschuhträgern herstellender Verbindungskörper mit dem zweiten Polschuhträger zu einer Einheit verbunden und an diese Einheit der Lagerträger angeformt ist.

Damit besteht die Möglichkeit, den Lagerträger fest und zuverlässig sowohl mit dem zweiten Polschuhträger als auch mit dem Verbindungselement zu verbinden.

Besonders günstig ist es dabei, wenn das Verbindungselement als Hülse ausgebildet ist.

Ferner ist es von Vorteil, wenn der Lagerträger in das Verbindungselement eingreifend ausgebildet ist, da damit eine besonders stabile und sichere Verbindung zwischen der jeweiligen Statoreinheit und dem Lagerträger besteht.

Hinsichtlich des Anformens des Lagerträgers wurden bislang keine näheren Angaben gemacht. Grundsätzlich sind dabei alle denkbaren Kunststoffformtechniken einsetzbar. Als besonders zweckmäßig hat es sich erwiesen, wenn der Lagerträger durch Kunststoffspritzen an den zweiten Polschuhträger angeformt ist.

Hinsichtlich der Verbindung des Verbindungselements mit dem zweiten Polschuhträger wurden bislang keine näheren Angaben gemacht. So könnte beispielsweise dadurch, daß der Lagerträger an das Verbindungselement und den zweiten Polschuhträger angeformt ist, über den Lagerträger auch die Verbindung des zweiten Polschuhträgers mit dem Verbindungselement hergestellt werden.

Um jedoch die Einheit aus zweitem Polschuhträger und Verbindungselement beim Anformen des jeweiligen Lagerträgers einfach handhaben zu können, ist vorzugsweise vorgesehen, daß das zweite Verbindungselement mit dem zweiten Polschuhträger durch Fügen verbunden ist.

Ein derartiges Fügen kann beispielsweise ein Kleben oder ein Löten sein. Besonders günstig für eine Herstellung hat es sich erwiesen, wenn das Verbindungselement mit dem zweiten Polschuhträger verschweißt ist.

Das stoffliche Verbinden durch Schweißen erfolgt vorzugsweise mittels eines Lasers, wobei entweder eine Punktschweißung oder die Ausbildung einer in sich geschlossenen durchgehenden Schweißnaht in Frage kommt.

Auch die nachfolgende Verbindung zwischen dem Verbindungselement und dem ersten Polschuhträger kann in unterschiedlichster Art und Weise gestaltet sein. Hierbei ist es vorteilhaft, wenn der erste Polschuhträger direkt mit dem Verbindungselement verbunden ist.

Eine derartige Verbindung erfolgt vorzugsweise über ein Fügen zwischen dem ersten Polschuhträger und dem Verbindungselement, wobei vorzugsweise das Fügen zweckmäßigerweise durch Schweißen, insbesondere durch Laserschweißen erfolgt, in gleicher Weise wie im Zusammenhang mit der Verbindung zwischen dem Verbindungselement und dem zweiten Polschuhträger erläutert.

Hinsichtlich der Fixierung der Spule bezüglich der Statoreinheiten wurden bislang keine näheren Angaben gemacht. So sieht eine besonders günstige Lösung vor, daß das Verbindungselement einen Träger für die Spule bildet, so daß sich die Spule beim Montieren der erfindungsgemäßen Statoreinheit auf das mit dem zweiten Polschuhträger verbundene Verbindungselement aufsetzen läßt, bevor ein Aufsetzen des ersten Polschuhträgers auf das Verbindungselement und ein Verbinden derselben miteinander erfolgt.

Um eine ausreichende elektrische Isolation zwischen der Spule und dem Verbindungselement sowie dem zweiten Polschuhträger zu erreichen, ist vorzugsweise vorgesehen, daß das Verbindungselement und der zweite Polschuhträger auf ihrer der Spule zugewandten Seite mit einer elektrisch isolierenden Beschichtung versehen sind.

Ferner ist es noch besser, wenn auch der erste Polschuhträger auf seiner der Spule zugewandten Seite mit einer elektrisch isolierenden Beschichtung versehen ist.

Vorzugsweise ist dabei die Beschichtung so gewählt, daß sie eine Dicke von weniger als 10 µm, noch besser weniger als 5 µm, aufweist, um die Präzision der Ausrichtung der einzelnen Elemente der Statoreinheit relativ zueinander nicht zu beeinträchtigen.

Hinsichtlich der Art der Beschichtung sind die unterschiedlichsten Möglichkeiten denkbar. Beispielsweise sind lackartige oder ähnliche Beschichtungen vorstellbar. Bei einer besonders geeignete Beschichtung ist vorgesehen, daß diese eine glasartige Konsistenz aufweist.

Um außerdem noch zu erreichen, daß die Polschuhelemente gegen Korrosion geschützt sind, ist vorzugsweise vorgesehen, daß die gesamten Polschuhelemente mit einer gegen Korrosion schützenden Beschichtung versehen sind.

Diese Beschichtung muß zwingend nicht identisch sein mit der elektrisch isolierenden Beschichtung.

Eine besonders günstige Ausführungsform der erfindungsgemäßen Lösung sieht jedoch vor, daß die elektrisch isolierende Beschichtung gleichzeitig auch als korrosionsschützende Beschichtung ausgebildet ist.

Vorzugsweise sind dabei sowohl der erste als auch der zweite Polschuhträger mit dieser Beschichtung überzogen.

Hinsichtlich der relativen Anordnung der Polschuhe relativ zu den übrigen Elementen der Statoreinheit wurden bislang keine näheren Angaben gemacht. So ist es besonders zweckmäßig, wenn die zweiten Polschuhe die Spule übergreifen und somit die Spule in Richtung der Rotorachse gegenüber der jeweiligen Rotoreinheit axial versetzt angeordnet ist.

Ferner wäre es prinzipiell denkbar, die ersten Polschuhe in einem anderen radialen Abstand von der Rotorachse anzuordnen als die zweiten Polschuhe. Um ein optimales Drehmoment des Elektromotors zu erhalten, ist vorzugsweise vorgesehen, daß die ersten und zweiten Polschuhe auf derselben, um die Rotorachse verlaufenden zylindrischen Fläche liegen und daß die einen Polschuhe in den Lücken zwischen den anderen Polschuhen angeordnet sind.

Ferner ist vorzugsweise vorgesehen, daß in Azimutalrichtung um die Rotorachse jeweils aufeinanderfolgend angeordnete Polschuhe identische Winkelabstände voneinander aufweisen.

Ferner ist es im Rahmen der erfindungsgemäßen Lösung besonders günstig, wenn die ersten und zweiten Polschuhe sich in der ersten Richtung soweit erstrecken, daß deren Enden in einer gemeinsamen, senkrecht zur Rotorachse verlaufenden Ebene liegen.

Prinzipiell wäre ein erfindungsgemäßer Elektromotor mit einer einzigen Statoreinheit realisierbar.

Um jedoch die Drehrichtung des Rotors eindeutig definieren zu können, ist vorzugsweise vorgesehen, daß der Elektromotor einen Stator mit zwei Statoreinheiten und einen Rotor mit jeweils einer der betreffenden Statoreinheit zugeordneten Rotoreinheit aufweist, die auf einer gemeinsamen Motorwelle sitzen.

Dabei könnten die Polschuhe so angeordnet sein, daß sie in dieselbe Richtung weisen.

Eine konstruktiv besonders günstige Lösung sieht vor, daß die Statoreinheiten so angeordnet sind, daß deren Polschuhe einander zugewandt sind. Damit besteht in besonders zweckmäßiger Weise die Möglichkeit, die Rotoreinheiten nebeneinanderliegend anzuordnen.

Um eine möglichst optimale Raumausnutzung bei möglichst optimaler Leistung zu erreichen, ist vorzugsweise vorgesehen, daß bei beiden Statoreinheiten alle Polschuhe auf derselben zylindrischen Fläche um die Rotorachse herum angeordnet sind.

Eine besonders kostengünstig zu fertigende Lösung sieht ferner vor, daß die beiden Statoreinheiten identisch ausgebildet sind, so daß diese aus identischen Teilen gefertigt werden können.

Ferner ist es insbesondere zur eindeutigen Festlegung der Drehrichtung des erfindungsgemäßen Elektromotors von Vorteil, wenn durch magnetische Wirkung, d.h. Anziehung, bedingte Haltestellungen der Rotoreinheiten relativ zu den jeweiligen Statoreinheiten diese relativ zueinander um einen halben Polabstand verdreht sind.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: einen Längsschnitt durch ein Ausführungsbeispiel des erfindungsgemäßen Elektromotors;
- Fig. 2: einen vergrößerten Schnitt ähnlich Fig. 1 im Bereich einer Statoreinheit des erfindungsgemäßen Elektromotors;
- Fig. 3: ein zweites Polschuhelement mit Verbindungselement des erfindungsgemäßen Elektromotors;
- Fig. 4: eine Draufsicht in Richtung des Pfeils A in Fig. 3;
- Fig. 5: eine Explosionsdarstellung der in Fig. 2 im Schnitt dargestellten Statoreinheit und
- Fig. 6: eine perspektivische Zusammenbaudarstellung der in Fig. 2 dargestellten Statoreinheit.

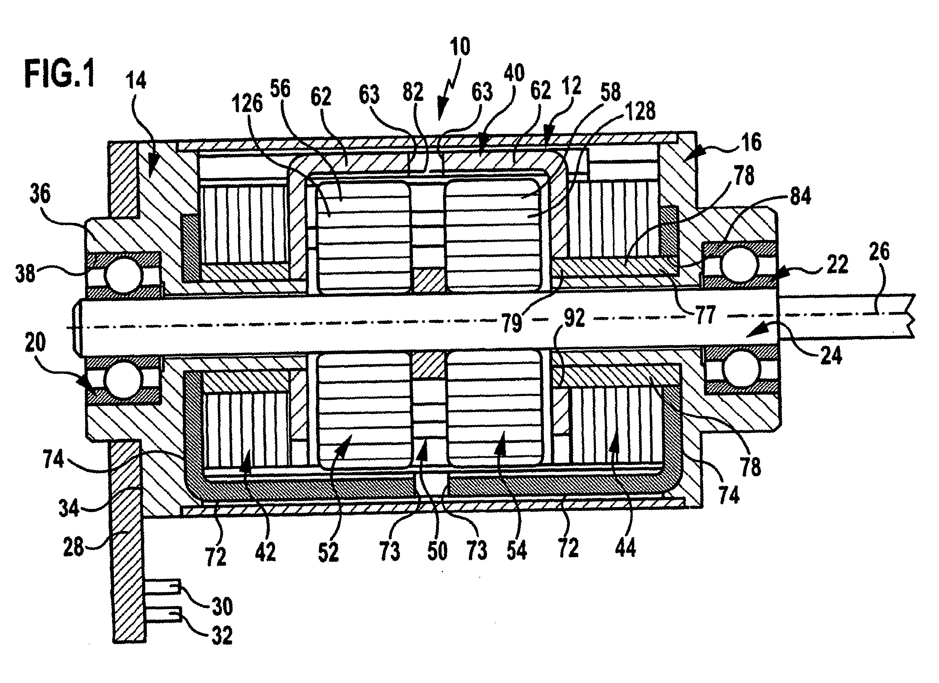

Ein in Fig. 1 dargestelltes Ausführungsbeispiel eines erfindungsgemäßen Elektromotors, vorzugsweise eines Schrittmotors, umfaßt ein Gehäuse 10 mit einem Gehäusemantel 12, der sich zwischen einem ersten Lagerträger 14 und einem zweiten Lagerträger 16 erstreckt, die beide fest mit dem Gehäusemantel 12 verbunden sind.

In jedem der Lagerträger 14 und 16 ist jeweils ein Drehlager 20 bzw. 22, vorzugsweise jeweils ausgebildet als Kugellager, gehalten, mit welchem eine Motorwelle 24 um eine Achse 26 drehbar relativ zum Gehäuse 10 gehalten ist.

Ferner trägt der erste Lagerträger 14 noch eine Anschlußplatine 28, auf welcher elektrische Anschlüsse 30, 32 zur Verbindung mit einer Stromversorgung des Elektromotors angeordnet sind.

Die Anschlußplatine 28 liegt dabei vorzugsweise auf einer Außenfläche 34 des Lagerträgers 14 auf und umschließt einen Haltering 36 des Lagerträgers 14, der seinerseits eine Aufnahme 38 für das Drehlager 20 bildet.

In dem Gehäuse 10 sind sowohl ein Stator 40, gebildet durch zwei identisch ausgebildete und spiegelsymmetrisch zueinander angeordnete Statoreinheiten 42 und 44, sowie ein Rotor 50, gebildet durch zwei Rotoreinheiten 52 und 54, angeordnet, wobei der Rotor 50 mit seinen beiden Rotoreinheiten 52 und 54 auf der Motorwelle 24 drehfest sitzt und somit in gleicher Weise wie die Motorwelle 24 mittels der Drehlager 20 und 22 gegenüber dem Gehäuse 10 um die Achse 26 als Rotorachse drehbar gelagert ist. Außerdem weist jede der Rotoreinheiten 52, 54 magnetisierte Bereiche 56 bzw. 58 auf.

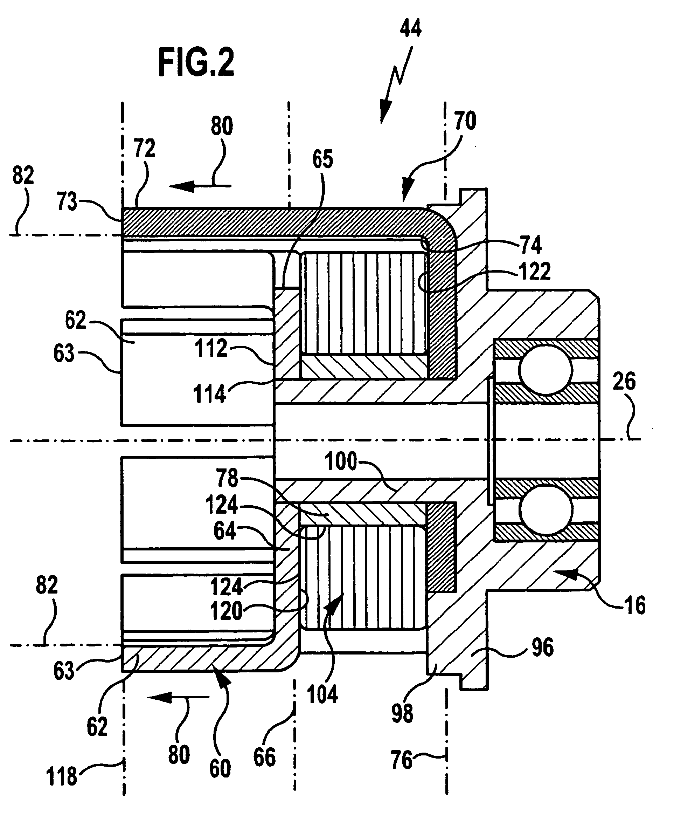

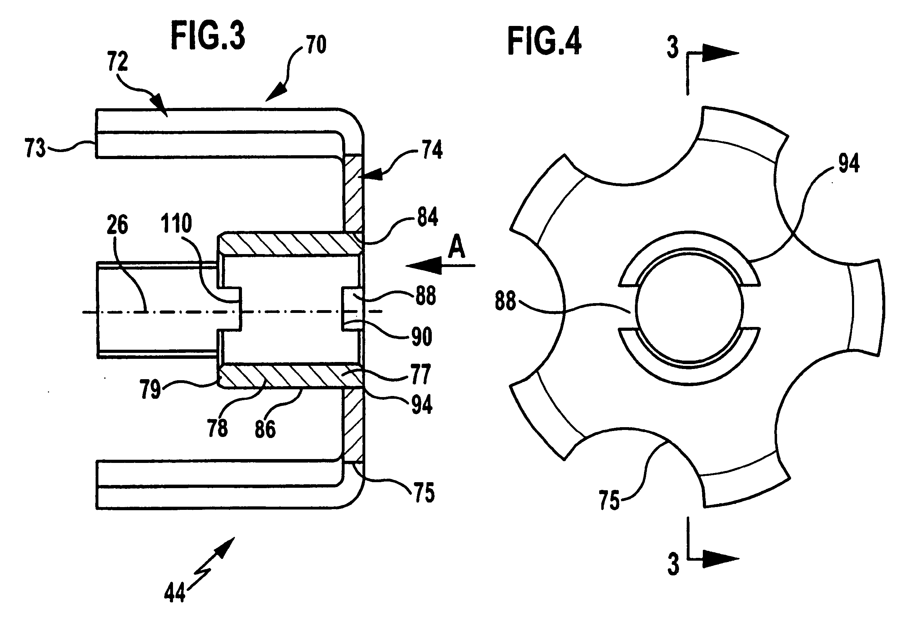

Wie in Fig. 2 und 3 vergrößert dargestellt, umfaßt die Statoreinheit 44 ein erstes Polschuhelement 60, das einen ersten Satz von als Klauenpole ausgebildeten Polschuhen 62 umfaßt, die sich ungefähr parallel zur Achse 26 erstrecken.

Der erste Satz von Polschuhen 62 ist dabei einstückig an einen ersten Polschuhträger 64 angeformt, der sich in einer vorzugsweise senkrecht zur Achse 26 verlaufenden Ebene 66 erstreckt.

Zweckmäßigerweise ist das erste Polschuhelement 60 ein Stanz-Biegeteil und damit kostengünstig herstellbar.

Ein zweites Polschuhelement 70 umfaßt einen Satz von zweiten Polschuhen 72, die sich in gleicher Weise wie die ersten Polschuhe 62 ungefähr parallel zu der Achse 26 erstrecken und dabei ebenfalls einstückig an einen zweiten Polschuhträger 74 angeformt sind, welcher sich vorzugsweise in einer Ebene 76 senkrecht zur Achse 26 erstreckt.

Vorzugsweise liegen die ersten und zweiten Polschuhe 62, 72 auf einer kreiszylindrisch zur Achse 26 verlaufenden Hüllfläche 82.

Auch das zweite Polschuhelement 70 ist zweckmäßigerweise ein Stanz-Biegeteil.

Ein magnetischer Schluß zwischen dem ersten Polschuhträger 64 und dem zweiten Polschuhträger 74 wird durch ein als Ganzes mit 78 bezeichnetes Verbindungselement hergestellt, welches, wie in Fig. 3 und 4 dargestellt, zunächst im Bereich eines ersten Endes 77 mit dem zweiten Polschuhelement 74 verbunden wird, und zwar dadurch, daß der zweite Polschuhträger 74 eine mittige Ausnehmung 84 aufweist, in welche das Verbindungselement 78 mit dem ersten Ende 77 eingreift, wobei es mit einer Außenfläche 86 in der Ausnehmung 84 anliegt.

Vorzugsweise erfolgt eine präzise Ausrichtung des Verbindungselements 78 relativ zum zweiten Polschuhträger 74 durch am zweiten Polschuhträger 74 vorgesehene Vorsprünge 88, welche in Ausschnitte 90 des Verbindungselements 78 eingreifen, wobei die Vorsprünge 88 über die Kontur der Ausnehmung 84 in Richtung der Rotorachse 26 überstehen um in die Ausnehmungen 90 einzugreifen.

Ferner erfolgt auch eine Verbindung des ersten Polschuhträgers 64 mit dem Verbindungselement 78 im Bereich eines zweiten Endes 79 dadurch, daß das Verbindungselement 78 mit dem zweiten Ende 79 in eine mittige Ausnehmung 92 des ersten Polschuhträgers 64 eingreift.

Erfindungsgemäß ist dabei vorgesehen, daß zunächst das zweite Polschuhelement 70 als Stanz-Biegeteil hergestellt wird und dann nach Einsetzen des Verbindungselements 78 in die Ausnehmung 84 ein Verschweißen durch Herstellen einer Schweißnaht 94 erfolgt, welche vorzugsweise auf einer dem ersten Polschuhträger 64 abgewandten Seite des zweiten Polschuhträgers 74 verläuft und welche eine Verbindung zwischen der Ausnehmung 84 des zweiten Polschuhträgers 74 und der Außenfläche 86 des Verbindungselements 78 herstellt.

Die in Fig. 3, 4 dargestellte Einheit aus dem zweiten Polschuhelement 70 und dem Verbindungselement 78 wird dann durch Anspritzen des Lagerträgers 16 durch Kunststoffspritzgießen mit diesem verbunden, wie in Fig. 2 dargestellt,
wobei der Lagerträger 16 einerseits eine Trägerplatte 96 aufweist, welche mit Nasen 98 in radial zwischen den Polschuhen 72 vorgesehene, bezüglich der Rotorachse 26 radial nach innen verlaufende Ausschnitte 75 des zweiten Polschuhträgers 74 eingreift, um den zweiten Polschuhträger 74 zentriert zur Achse 26 aufzunehmen, so daß beim Anspritzen des Lagerträgers 16 durch Kunststoffspritzgießen ein zumindest teilweises Einbetten des zweiten Polschuhträgers 74 in die Trägerplatte 96 erfolgt.

Darüber hinaus wird beim Anspritzen des Lagerträgers 16 an die Trägerplatte 96 eine hülsenförmige Aufnahme 100 angeformt, wobei sich die Aufnahme 100 in das als Hülse ausgebildete Verbindungselement 78 hineinerstreckt und somit zu einer verbesserten Fixierung der Einheit aus dem zweiten Polschuhelement 70 und dem Verbindungselement 78 an dem Lagerträger 16 führt.

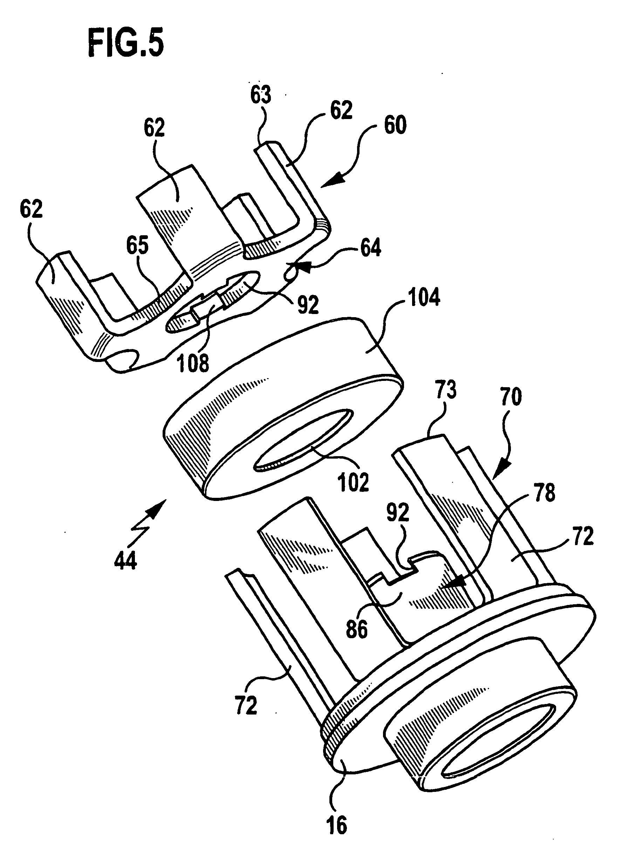

Nach Anspritzen des Lagerträgers 16 an die Einheit aus dem zweiten Polschuhelement 70 und dem Verbindungselement 78 erfolgt, wie in Fig. 4 dargestellt, ein Aufsetzen einer auf einem Spulenkörper 102 vorgewickelten Spule 104 so, daß der Spulenkörper 102 auf dem Verbindungselement 78, insbesondere der Außenfläche 86 desselben, aufliegt. Schließlich erfolgt ein Aufsetzen des ersten Polschuhelements 60 mit dem ersten Polschuhträger 64, wobei zur drehfesten Festlegung des ersten Polschuhträgers 64 zum Verbindungselement 78 Vorsprünge 108 des ersten Polschuhträgers 64 in die Ausnehmungen 110 eingreifen, während das Verbindungselement 78 mit seiner Außenfläche 86 in eine Ausnehmung 92 in dem ersten Polschuhträger 64 eingreift und somit eine formschlüssige exakte Positionierung des ersten Polschuhträgers 64 relativ zum Verbindungselement 78 möglich ist. (Fig. 3, 5)

Vorzugsweise erfolgt noch ein Verschweißen zwischen dem Verbindungselement 78 und dem ersten Polschuhträger 64, und zwar auf einer dem zweiten Polschuhträger 74 abgewandten Seite 112 des ersten Polschuhträgers 64, durch Anbringen einer Schweißnaht 114 zur Überbrückung eines Spalts zwischen dem Verbindungselement 78 und dem ersten Polschuhträger 64 im Bereich der Ausnehmung 92 und der Außenfläche 86.

Somit sitzt die Spule 104 fest zwischen den Polschuhträgern 64 und 74, wobei die zweiten Polschuhe 72 über die Spule 104 hinweggreifen.

Ferner erstrecken sich die zweiten Polschuhe 72 in der ersten Richtung 80 bis zum Ende 73 und außerdem erstrecken sich auch die ersten Polschuhe 62 bis zu ihrem Ende 63, wobei die Enden 73 und 63 der Polschuhe 72 bzw. 62 in einer Ebene 118 liegen, die senkrecht zur Achse 26 verläuft.

Um einen ausreichend großen Abstand zwischen dem ersten Polschuhträger 64 und den zweiten Polschuhen 72 zu erhalten, ist, wie insbesondere in Fig. 4 dargestellt, der erste Polschuhträger 64 zwischen den Polschuhen 62 mit radial in Richtung der Achse 26 nach innen gezogenen Aussparungen 65 versehen, so daß der erste Polschuhträger 64 einen ausreichend großen Abstand von den zweiten Polschuhen 72 aufweist.

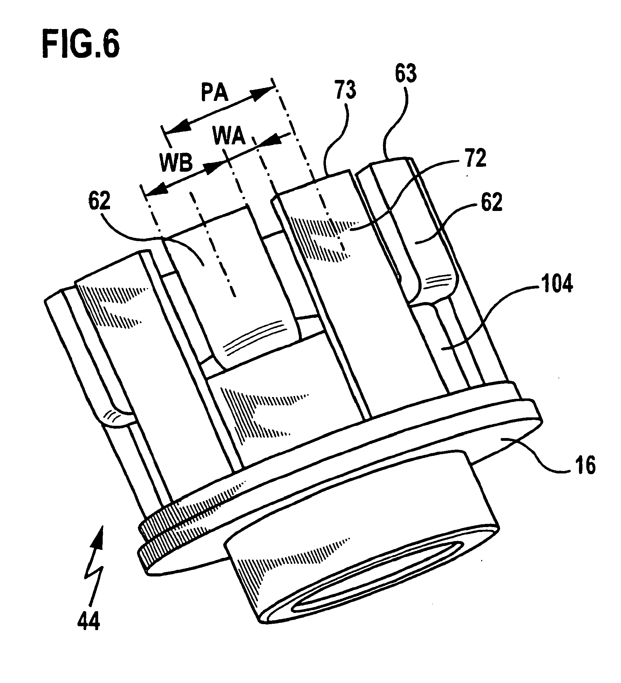

Wie in Fig. 6 dargestellt, weisen alle Polschuhe 62, 72 in Azimutalrichtung zur Achse 26 eine Breite auf, die einem Winkelabstand WB entspricht, und jeweils mit einem Polabstand PA aufeinanderfolgende Polschuhe 62, 72 sind bezogen auf die Achse 26 in einem Winkelabstand WA voneinander angeordnet, der zwischen allen Polschuhen 62, 72 identisch ist.

Zur elektrischen Isolation der Spule 104 gegenüber den Polschuhelementen 60, 70 sind zumindest sowohl das Verbindungselement 78 im Bereich der Außenfläche 86 sowie der erste Polschuhträger 64 auf seiner der Spule 104 zugewandten Seite 120 sowie der zweite Polschuhträger 74 auf seiner der Spule 104 zugewandten Seite 122 mit einer Beschichtung 124 versehen, die eine Schichtdicke von weniger als 10 *µ*m, noch besser weniger als 5 *µ*m, aufweist und elektrisch isolierend ist, mit einer Durchschlagfestigkeit von bis zu 0,5 kV.

Die Beschichtung 124 ist vorzugsweise eine glasartige Schicht, insbesondere eine CVD-Schicht, und dient vorzugsweise außerdem noch dazu, die Polschuhelemente 60, 70 gegen Korrosion zu schützen, so daß die gesamten Polschuhelemente 60, 70 sowie das Verbindungselement 78 mit dieser Beschichtung 124 überzogen sind.

Bei dem erfindungsgemäßen Ausführungsbeispiel eines Elektromotors sind die Statoreinheiten 42, 44, wie in Fig. 1 erkennbar, identisch ausgebildet und dabei ist jeweils der Lagerträger 14, 16 zumindest an dem zweiten Polschuhträger 74 angeformt, so daß zweckmäßigerweise die Polschuhe 62, 72 beider Statoreinheiten auf derselben zylindrischen Hüllfläche 82 um die Achse 26 liegen und außerdem mit ihren Enden 63, 73 einander zugewandt angeordnet sind. Damit läßt sich in einem jeweils von den Polschuhen 62, 72 umschlossenen Raum 126, 128 die jeweilige Rotoreinheit 52, 54 anordnen.

Beispielsweise sind die beiden Rotoreinheiten 52, 54 separat auf der Motorwelle 24 angeordnet und drehfest mit dieser verbunden, so daß beispielsweise die Möglichkeit besteht, die Rotoreinheiten 52, 54 relativ zueinander verdreht, vorzugsweise um einen halben Polabstand PA relativ zueinander verdreht, auf der Motorwelle 24 anzuordnen, während die Polschuhe 62, 72 jeweils exakt einander gegenüberliegend angeordnet sind.

## Patentansprüche

1. Elektrische Maschine mit
einem Gehäuse (10), mit mindestens einem mit magnetisierten Bereichen versehenen und um eine Rotorachse (26) an mindestens einem Lagerträger (14, 16) des Gehäuses (10) drehbar gelagerten Rotor (50),
und mit einem mindestens eine Statoreinheit (42, 44) aufweisenden Stator, wobei jede Statoreinheit zwei Polschuhelemente (60, 70) aufweist, von denen ein erstes Polschuhelement (60) einen sich quer zur Rotorachse (26) erstreckenden und auf einer dem Rotor (50) zugewandten Seite der Spule (104) angeordneten ersten Polschuhträger (64) sowie einen Satz mit diesem einstückig, als Klauenpole ausgebildete und um die Rotorachse (26) herum angeordnete erste Polschuhe (62) aufweist, welche sich von dem ersten Polschuhträger (64) weg in einer ersten Richtung (80) ungefähr parallel zur Rotorachse (26) erstrecken, und von denen ein zweites Polschuhelement (70) einen sich quer zur Rotorachse (26) erstreckenden und auf einer dem Rotor (50) abgewandten Seite der Spule (104) angeordneten zweiten Polschuhträger (74) sowie einen Satz mit diesem einstückig als Klauenpole ausgebildete und um die Rotorachse (26) herum angeordnete zweite Polschuhe (72) aufweist, die sich ebenfalls in der ersten Richtung (80) vom zweiten Polschuhträger (74) weg ungefähr parallel zur Rotorachse (26) über den Rotor (50) hinweg erstrecken, wobei mit der in Richtung der Rotorachse (26) auf den Rotor (50) folgend angeordneten und um die Rotorachse (26) herum verlaufend gewickelten Spule (104), die ersten und zweiten Polschuhe (62, 72) magnetisierbar sind,
**dadurch gekennzeichnet, dass** die elektrische Maschine ein Elektromotor ist, dass der Lagerträger (14, 16) aus Kunststoff ist, dass durch Anformen an den zweiten Polschuhträger (74) die Statoreinheit (42, 44) an diesem fixiert ist, und dass der mindestens eine Lagerträger (14, 16) mit der Statoreinheit (42, 44) in einen Gehäusemantel (12) des Gehäuses (10) eingesetzt ist.

2. Elektrische Maschine nach Anspruch 1, **dadurch gekennzeichnet, dass** ein einen magnetischen Schluss zwischen den Polschuhträger (64, 74) herstellendes Verbindungselement (78) mit dem zweiten Polschuhträger (74) zu einer Einheit verbunden und an diese Einheit der Lagerträger (14, 16) angeformt ist.

3. Elektrische Maschine nach Anspruch 2, **dadurch gekennzeichnet, dass** das Verbindungselement (78) als Hülse ausgebildet ist.

4. Elektrische Maschine nach Anspruch 2 oder 3, **dadurch gekennzeichnet, dass** der Lagerträger (14, 16) in das Verbindungselement (78) eingreifend ausgebildet ist.

5. Elektrische Maschine nach einem der voranstehenden Ansprüche,
**dadurch gekennzeichnet, dass** der Lagerträger (14, 16) durch Kunststoffspritzen angeformt ist.

6. Elektrische Maschine nach einem der Ansprüche 2 bis 5, **dadurch gekennzeichnet, dass** das Verbindungselement (78) mit dem zweiten Polschuhträger (78) durch Fügen verbunden ist.

7. Elektrische Maschine nach Anspruch 6, **dadurch gekennzeichnet, dass** das Verbindungselement (78) mit dem zweiten Polschuhträger (74) verschweißt ist.

8. Elektrische Maschine nach einem der Ansprüche 2 bis 7, **dadurch gekennzeichnet, dass** der erste Polschuhträger (64) mit dem Verbindungselement (78) verbunden ist.

9. Elektrische Maschine nach Anspruch 8, **dadurch gekennzeichnet, dass** der erste Polschuhträger (64) mit dem Verbindungselement (78) durch Fügen verbunden ist.

10. Elektrische Maschine nach einem der Ansprüche 2 bis 9, **dadurch gekennzeichnet, dass** das Verbindungselement (78) einen Träger für die Spule (104) bildet.

11. Elektrische Maschine nach einem der Ansprüche 2 bis 10, **dadurch gekennzeichnet, dass** das Verbindungselement (78) und der zweite Polschuhträger (74) auf ihrer der Spule (104) zugewandten Seite mit einer elektrisch isolierenden Beschichtung (124) versehen sind.

12. Elektrische Maschine nach Anspruch 11, **dadurch gekennzeichnet, dass** der erste Polschuhträger (64) auf seiner der Spule (104) zugewandten Seite mit einer elektrisch isolierenden Beschichtung (124) versehen ist.

13. Elektrische Maschine nach Anspruch 11 oder 12, **dadurch gekennzeichnet, dass** die Beschichtung (124) eine Dicke von weniger als 10 µm aufweist.

14. Elektrische Maschine nach einem der Ansprüche 11 bis 13, **dadurch gekennzeichnet, dass** die Beschichtung (124) eine glasartige Konsistenz aufweist.

15. Elektrische Maschine nach einem der voranstehenden Ansprüche, **dadurch gekennzeichnet, dass** die gesamten Polschuhelemente (60, 70) mit einer gegen Korrosion schützenden Beschichtung (124) versehen sind.

16. Elektrische Maschine nach einem der voranstehenden Ansprüche, **dadurch gekennzeichnet, dass** die zweiten Polschuhe (72) die Spule (104) übergreifen.

17. Elektrische Maschine nach einem der voranstehenden Ansprüche, **dadurch gekennzeichnet, dass** die ersten und zweiten Polschuhe (62, 72) auf derselben, um die Rotorachse (26) verlaufenden zylindrischen Fläche (82) liegen und dass die einen Polschuhe (62, 72) in Lücken der anderen Polschuhe (72, 62) angeordnet sind.

18. Elektrische Maschine nach Anspruch 17, **dadurch gekennzeichnet, dass** in Azimutalrichtung um die Rotorachse (26) jeweils aufeinanderfolgend angeordnete Polschuhe (62, 72) identische Winkelabstände (WA) voneinander aufweisen.

19. Elektrische Maschine nach Anspruch 17 oder 18, **dadurch gekennzeichnet, dass** die ersten und zweiten Polschuhe (62, 72) sich in der ersten Richtung (80) soweit erstrecken, dass deren Enden (63, 73) in einer gemeinsamen senkrecht zur Rotorachse (26) verlaufenden Ebene (118) liegen.

20. Elektrische Maschine nach einem der voranstehenden Ansprüche,
**dadurch gekennzeichnet, dass** der Elektromotor einen Stator (40) mit zwei Statoreinheiten (42, 44) und einen Rotor (50) mit jeweils einer einer Statoreinheit (42, 44) zugeordneten Rotoreinheit (52, 54) aufweist, die auf einer gemeinsamen Motorwelle (24) sitzen.

21. Elektrische Maschine nach Anspruch 20, **dadurch gekennzeichnet, dass** die Statoreinheiten (42, 44) so angeordnet sind, dass deren Polschuhe (62, 72) einander zugewandt sind.

22. Elektrische Maschine nach Anspruch 20 oder 21, **dadurch gekennzeichnet, dass** bei beiden Statoreinheiten (42, 44) alle Polschuhe (62, 72) auf derselben zylindrischen Fläche (82) um die Rotorachse herum angeordnet sind.

23. Elektrische Maschine nach einem der Ansprüche 20 bis 22, **dadurch gekennzeichnet, dass** die beiden Statoreinheiten (42, 44) identisch ausgebildet sind.

24. Elektrische Maschine nach einem der Ansprüche 20 bis 23, **dadurch gekennzeichnet, dass** durch magnetische Wirkung bedingte Haltestellungen der Rotoreinheiten (52, 54) relativ zu den jeweiligen Statoreinheiten (42, 44) relativ zueinander um einen halben Polabstand (PA) verdrehte Magnetpole aufweisen.

## Claims

1. An electrical machine comprising
a housing (10), comprising at least one rotor (50) provided with magnetized regions and mounted rotatably about a rotor axis (26) on at least one bearing support (14, 16) of the housing (10),
and comprising a stator having at least one stator unit (42, 44), each stator unit having two pole shoe elements (60, 70) of which a first pole shoe element (60) has a first pole shoe carrier (64) which extends transversely with respect to the rotor axis (26) and is disposed on a side of the coil (104) facing towards the rotor (50), the first pole shoe element (60) also having a set of first pole shoes (62) which are formed integrally with this pole shoe carrier (64) as claw poles, are disposed around the rotor axis (26) and extend away from the first pole shoe carrier (64) in a first direction (80) approximately parallel to the rotor axis (26), and of which pole shoe elements (60, 70) a second pole shoe element (70) has a second pole shoe carrier (74) which extends transversely with respect to the rotor axis (26) and is disposed on a side of the coil (104) facing away from the rotor (50), the second pole shoe element (70) also having a set of second pole shoes (72) which are formed integrally with this pole shoe carrier (74) as claw poles, are disposed around the rotor axis (26) and also extend in the first direction (80) away from the second pole shoe carrier (74) in the first direction approximately parallel to the rotor axis (26) beyond the rotor (50), the first and second pole shoes (62, 72) being magnetizable by means of the coil (104), which is positioned following the rotor (50) in the direction of the rotor axis (26) and with its windings arranged to encircle the rotor axis (26),
**characterized in that** the electrical machine is an electric motor, that the bearing support (14, 16) is of plastics, that the stator unit (42, 44) is secured to the second pole shoe carrier (74) by being moulded onto it, and that the at least one bearing support (14, 16) is introduced with the stator unit (42, 44) into a housing sleeve (12) of the housing (10).

2. An electrical machine according to Claim 1, **characterized in that** a connecting element (78) which establishes a magnetic circuit between the pole shoe carriers (64, 74) is connected to the second pole shoe carrier (74) to form a unit and the bearing support (14, 16) is molded onto this unit.

3. An electrical machine according to Claim 2, **characterized in that** the connecting element (78) is formed as a sleeve.

4. An electrical machine according to Claim 2 or 3, **characterized in that** the bearing support (14, 16) is formed to engage into the connecting element (78).

5. An electrical machine according to one of the preceding claims,
**characterized in that** the bearing support (14, 16) is formed by means of plastics injection molding.

6. An electrical machine according to one of Claims 2 to 5, **characterized in that** the connecting element (78) is connected to the second pole shoe carrier (74) by means of joining.

7. An electrical machine according to Claim 6, **characterized in that** the connecting element (78) is welded to the second pole shoe carrier (74).

8. An electrical machine according to one of Claims 2 to 7, **characterized in that** the first pole shoe carrier (64) is connected to the connecting element (78).

9. An electrical machine according to Claim 8, **characterized in that** the first pole shoe carrier (64) is connected to the connecting element (78) by means of joining.

10. An electrical machine according to one of Claims 2 to 9, **characterized in that** the connecting element (78) forms a carrier for the coil (104).

11. An electrical machine according to one of Claims 2 to 10, **characterized in that** the connecting element (78) and the second pole shoe carrier (74) are provided with an electrically insulating coating (124) on the side thereof facing towards the coil (104).

12. An electrical machine according to Claim 11, **characterized in that** the first pole shoe carrier (64) is provided with an electrically insulating coating (124) on the side thereof facing towards the coil (104).

13. An electrical machine according to Claim 11 or 12, **characterized in that** the coating (124) has a thickness of less than 10 µm.

14. An electrical machine according to one of Claims 11 to 13, **characterized in that** the coating (124) has a glass-like consistency.

15. An electrical machine according to one of the preceding claims,
**characterized in that** the entire pole shoe elements (60, 70) are provided with coating (124) which protects against corrosion.

16. An electrical machine according to one of the preceding claims,
**characterized in that** the second pole shoes (72) overlap the coil (104).

17. An electrical machine according to one of the preceding claims,
**characterized in that** the first and second pole shoes (62, 72) lie on the same cylindrical surface (82) which extends about the rotor axis (26) and that the one pole shoes (62, 72) are disposed in the gaps between the other pole shoes (72, 62).

18. An electrical machine according to Claim 17, **characterized in that** the pole shoes (62, 72) disposed successively in an azimuthal direction around the rotor axis (26) have identical angular spacings (WA) from one another.

19. An electrical machine according to Claim 17 or 18, **characterized in that** the first and second pole shoes (62, 72) extend so far in the first direction (80) that their ends (63, 73) lie in a common plane (118) running perpendicular to the rotor axis (26).

20. An electrical machine according to one of the preceding claims,
**characterized in that** the electrical machine has a stator (40) with two stator units (42, 44) and a rotor (50) having a respective rotor unit (52, 54) associated with each stator unit (42, 44), the rotor units being seated on a common shaft (24).

21. An electrical machine according to Claim 20, **characterized in that** the stator units (42, 44) are arranged in such a way that their pole shoes (62, 72) face each other.

22. An electrical machine according to Claim 20 or 21, **characterized in that** for both stator units (42, 44), all pole shoes (62, 72) are disposed on the same cylindrical surface (82) around the rotor axis.

23. An electrical machine according to one of Claims 20 to 22, **characterized in that** both of the stator units (42, 44) are of identical construction.

24. An electrical machine according to one of the Claims 20 to 23,
**characterized in that** holding positions of the rotor units (52, 54), determined by magnetic effect, relative to the respective stator units (42, 44), are rotationally displaced in relation to each other by half a pole space (PA).

## Revendications

1. Machine électrique comprenant :
un boîtier (10), avec au moins un rotor (50) doté de zones magnétisées et logé de façon à pouvoir tourner autour d'un axe de rotor (26) sur au moins un support de palier (14, 16) du boîtier (10),
et un stator présentant au moins une unité de stator (42, 44), chaque unité de stator présentant deux éléments de pièce polaire (60, 70), dont un premier élément de pièce polaire (60) présente un premier support de pièce polaire (64) s'étendant transversalement à l'axe du rotor (26) et disposé sur un côté de la bobine (104) tourné vers le rotor (50) et un ensemble de premières pièces polaires (62) réalisées d'une seule pièce avec ce support sous forme de pôles à griffes et disposées autour de l'axe de rotor (26), qui s'étendent à partir du premier support de pièce polaire (64) dans une première direction (80) à peu près parallèlement à l'axe du rotor (26), et dont un second élément de pièce polaire (70) présente un second support de pièce polaire (74) s'étendant transversalement à l'axe du rotor (26) et disposé sur un côté de la bobine (104) opposé au rotor (50) et un ensemble de secondes pièces polaires (72) réalisées d'une seule pièce avec ce support sous forme de pôles à griffes et disposées autour de l'axe du rotor (26), lesquelles pièces polaires s'étendent également dans la première direction (80) à partir du second support de pièce polaire (74) à peu près parallèlement à l'axe du rotor (26) sur le rotor (50), les premières et secondes pièces polaires (62, 72) pouvant être magnétisées avec la bobine (104) enroulée, disposée en direction de l'axe du rotor (26) en suivant le rotor (50) et agencée autour de l'axe du rotor (26),
**caractérisée en ce que** la machine électrique est un moteur électrique, **en ce que** le support de palier (14, 16) est en plastique, **en ce que** l'unité de stator (42, 44) est fixée sur ce support par formage sur le second support de pièce polaire (74) et **en ce que** le au moins un support de palier (14, 16) est inséré avec l'unité de stator (42, 44) dans une enveloppe de boîtier (12) du boîtier (10).

2. Machine électrique selon la revendication 1,
**caractérisée en ce qu'**un élément de liaison (78) établissant une fermeture magnétique entre les supports de pièce polaire (64, 74) est relié au second support de pièce polaire (74) pour former une unité et le support de palier (14, 16) est formé sur cette unité.

3. Machine électrique selon la revendication 2, **caractérisée en ce que** l'élément de liaison (78) est conçu comme une douille.

4. Machine électrique selon la revendication 2 ou 3, **caractérisée en ce que** le support de palier (14, 16) est conçu par engagement dans l'élément de liaison (78).

5. Machine électrique selon l'une quelconque des revendications précédentes, **caractérisée en ce que** le support de palier (14, 16) est formé par injection de plastique.

6. Machine électrique selon l'une quelconque des revendications 2 à 5, **caractérisée en ce que** l'élément de liaison (78) est relié au second support de pièce polaire (78) par assemblage.

7. Machine électrique selon la revendication 6, **caractérisée en ce que** l'élément de liaison (78) est soudé avec le second support de pièce polaire (74).

8. Machine électrique selon l'une quelconque des revendications 2 à 7, **caractérisée en ce que** le premier support de pièce polaire (64) est relié à l'élément de liaison (78).

9. Machine électrique selon la revendication 8, **caractérisée en ce que** le premier support de pièce polaire (64) est relié à l'élément de liaison (78) par assemblage.

10. Machine électrique selon l'une quelconque des revendications 2 à 9, **caractérisée en ce que** l'élément de liaison (78) forme un support pour la bobine (104).

11. Machine électrique selon l'une quelconque des revendications 2 à 10, **caractérisée en ce que** l'élément de liaison (78) et le second support de pièce polaire (74) sont dotés sur leur côté tourné vers la bobine (104) d'un revêtement (124) électro-isolant.

12. Machine électrique selon la revendication 11, **caractérisée en ce que** le premier support de pièce polaire (64) est doté sur son côté tourné vers la bobine (104) d'un revêtement (124) électro-isolant.

13. Machine électrique selon la revendication 11 ou 12, **caractérisée en ce que** le revêtement (124) présente une épaisseur inférieure à 10 *µ*m.

14. Machine électrique selon l'une quelconque des revendications 11 à 13, **caractérisée en ce que** le revêtement (124) présente une consistance de type verre.

15. Machine électrique selon l'une quelconque des revendications précédentes, **caractérisée en ce que** tous les éléments de pièce polaire (60, 70) sont dotés d'un revêtement (124) protégeant contre la corrosion.

16. Machine électrique selon l'une quelconque des revendications précédentes, **caractérisée en ce que** les secondes pièces polaires (72) recouvrent la bobine.

17. Machine électrique selon l'une quelconque des revendications précédentes, **caractérisée en ce que** les première et seconde pièces polaires (62, 72) sont disposées sur la même surface (82) cylindrique agencée autour de l'axe du rotor (26) et **en ce que** les pièces polaires (62, 72) sont disposées dans des vides des autres pièces polaires (72, 62).

18. Machine électrique selon la revendication 17, **caractérisée en ce que** des pièces polaires (62, 72) disposées dans le sens azimutal autour de l'axe du rotor (26) en se suivant présentent des distances angulaires (WA) identiques les unes par rapport aux autres.

19. Machine électrique selon la revendication 17 ou 18, **caractérisée en ce que** les premières et secondes pièces polaires (62, 72) s'étendent dans la première direction (80) de telle sorte que leurs extrémités (63, 73) sont disposées dans un plan (118) commun agencé perpendiculairement à l'axe du rotor (26).

20. Machine électrique selon l'une quelconque des revendications précédentes, **caractérisée en ce que** le moteur électrique présente un stator (40) avec deux unités de stator (42, 44) et un rotor (50) comprenant respectivement une unité de rotor (42, 44) attribuée chacune à une unité de stator (52, 54), qui sont logées sur un arbre de moteur (24) commun.

21. Machine électrique selon la revendication 20, **caractérisée en ce que** les unités de stator (42, 44) sont disposées de telle sorte que leurs pièces polaires (62, 72) sont tournées les unes vers les autres.

22. Machine électrique selon la revendication 20 ou 21, **caractérisée en ce que**, sur les deux unités de stator (42, 44), toutes les pièces polaires (62, 72) sont disposées sur la même surface (82) cylindrique autour de l'axe du rotor.

23. Machine électrique selon l'une quelconque des revendications 20 à 22, **caractérisée en ce que** les deux unités de stator (42, 44) sont réalisées de façon identique.

24. Machine électrique selon l'une quelconque des revendications 20 à 23, **caractérisée en ce que** des positions de retenue, conditionnées par un effet magnétique, des unités de rotor (52, 54) par rapport aux unités de stator (42, 44) respectives présentent des pôles magnétiques tournés d'un demi-espace polaire (PA) les uns par rapport aux autres.
